Europäisches Patentamt

European Patent Office

Office européen des brevets

(11) Publication number: 0 278 253 B1

# EUROPEAN PATENT SPECIFICATION

(45) Date of publication of patent specification: 06.05.92  (51) Int. Cl.5: G09G 3/00

(21) Application number: 88100510.2

(22) Date of filing: 15.01.88

(54) Circuit for energising an electroluminescent panel.

(30) Priority: 13.02.87 US 14894

(43) Date of publication of application:
17.08.88 Bulletin 88/33

(45) Publication of the grant of the patent:
06.05.92 Bulletin 92/19

(84) Designated Contracting States:
DE FR GB IT

(56) References cited:
GB-A- 1 556 450
US-A- 4 253 097
US-A- 4 595 920

(73) Proprietor: International Business Machines
Corporation
Old Orchard Road
Armonk, N.Y. 10504(US)

(72) Inventor: Kinnard, J. Rothe
623 Amesbury Lane
Austin Texas 78752(US)
Inventor: Oliver, Dennis Neal
10304 Talleyran Drive
Austin Texas 78750(US)

(74) Representative: Bailey, Geoffrey Alan
IBM United Kingdom Limited Intellectual
Property Department Hursley Park
Winchester Hampshire SO21 2JN(GB)

Rank Xerox (UK) Business Services
(3.08/2.18/2.0)

## Description

This invention relates generally to electrical power conversion and more particularly to a technique for very compactly powering an electroluminescent panel.

In recent years a number of manufacturers have introduced portable and highly compact personal computers. While the technology associated with integrated circuit packaging has advanced to the point that a great deal of processing function can be packaged into a small, portable unit, the display devices which have typically been used with these portable computers have had significant limitations associated therewith.

The most commonly used display technology for these laptop computers has been the liquid crystal display, or LCD. In an LCD the characters are formed by selectively darkening areas of a relatively transparent sheet. In the simplest form of these displays, which are seen daily in electronic watches and clocks, as well as in laptop computers, a flat panel of reflective material is positioned behind this relatively transparent sheet in which the darkened images are formed. Thus, the user is able to perceive these images by seeing the contrast between the light reflected back through the non-darkened areas of the transparent sheet and the darkened areas where light is not reflected.

This simplest form of LCD technology is adequate in many instances, particularly in those environments in which the ambient lighting level is high enough that adequate light is available for transmission through the relatively transparent layer to the reflective surface and back through the relatively transparent layer to the viewer's eyes. This explains the phenomenon which is observed by users of this display technology, that the brighter the ambient light, the easier it is to read the images formed on the display device.

Thus, in environments in which the ambient light is not particularly high, the LCD device becomes difficult to read. This problem involves numerous considerations. The comfort level which needs to be provided to the user relates to how intensive the use of the display is to be. That is, the purchaser of a low cost wrist watch may well be satisfied with not being able to see the digits on the wrist watch as clearly in low light environments, because it involves little added difficulty to look at the watch longer to correctly perceive the relatively few digits being considered. Additionally, since the LCD display on a wrist watch is small, the problem has often been reduced by providing a tiny incandescent light bulb at one edge of the display which is adequate to light the display for quick viewing.

The problem of poor visibility of LCDs in low light environments is a highly significant one for the larger LCDs used in laptop computers. These devices are typically large enough to display in excess of twenty lines of text having eighty characters each. They are often viewed for extended periods of time, so it is not feasible to ignore the additional eye strain. A single, or even a great plurality of incandescent light bulbs along the edges of the display will not provide an even enough light source to adequately and uniformly light the entire display area. Additionally, the electrical power requirement for a large incandescent array would effectively render the computer non-portable.

As a solution to the problem of providing a light source for the large LCD used in laptop computers, the reflective panel behind the relatively transparent layer has been replaced by an electroluminescent panel which is powered by a substantially high voltage alternating current source. One representative model of such an electroluminescent panel requires around 140 volts RMS at a frequency of about 700 Hertz. Higher frequencies than this shorten the life of the electroluminescent panel as do wave shapes which are not substantially sinusoidal.

The PC Convertible is a laptop personal computer marketed by International Business Machines Corporation which offers an LCD having no supplemental lighting capability. The word "convertible" in its product name is descriptive of the feature that the LCD may be readily detached from the laptop computer when it is desired to interface the computer to a different display, such as a cathode ray tube (CRT), when such a display is available and it is not necessary to rely on the internal batteries of the computer.

In providing an LCD which is backlighted with an electroluminescent panel as an option for such a computer, the problem arises of how to provide the relatively high voltage to the electroluminescent panel. Other laptop computers having liquid crystal displays supplementally lighted by electroluminescent panels have included the high voltage power supplies for these panels in the main, system unit portion of the laptop computer. Since their displays are not detachable there has been no safety problem in providing the high voltage in the system unit and conveying it to the display device through a suitably insulated conductor. In fact, a suitably insulated connector could be provided to allow the safe detachment of the display if such a connector were being designed into the system from the beginning. However, in the case of the PC Convertible, the system unit without the high voltage power supply and the low voltage connector are an existing configuration. It would be highly advantageous to be able to allow users of this product the additional advantages of an LCD having supplemental lighting without the requirement to also purchase a new system unit.

Previous circuits packaged in system units of laptop computers to power electroluminescent panels in LCDs have utilised relatively large magnetic components including a transformer operating in a push-pull, parallel resonant circuit. Such a circuit was not adaptable to packaging within the separable LCD enclosure of the system described above having the detachable display. Attempts to size reduce the prior art circuits through the use of exotic magnetic core materials were unsuccessful in achieving enough size reduction to allow packaging within the detachable LCD enclosure so that the same system unit and connector thereon could be used with an improved display having an electroluminescent panel backlighting.

Other known driving circuits for electroluminescent displays are described in GB-A-1556450 and US-A-4595920. Both these driving circuits involve the use of bulky transformers. In GB-A-1556450 an electroluminescent panel and an inductor are connected in series as part of a power oscillator. However, these known power oscillators are not operated to be self-commutating.

It would, therefore, be highly advantageous to provide a circuit to power the electroluminescent panel for a backlighted LCD with the circuit being packaged with the display itself, rather than needing to be remotely mounted.

According to the invention, there is provided a circuit for energising an electroluminescent panel with sinusoidal power comprising a series-resonant power oscillator having said panel and an inductor connected in series as its resonant components, characterised in that said power oscillator is a self-commutating power oscillator comprising additionally a first latch circuit for completing a series-circuit path from a low DC-to-high DC converter, which supplies said oscillator, through the resonant components to a reference voltage during one half of the period of the resonant frequency of the resonant components, and a second latch circuit for completing a parallel-circuit path across the resonant components during the other half of the period of the resonant frequency.

An embodiment of the invention will now be described, by way of example, with reference to the accompanying drawings, in which:

Fig. 1 is a block diagram of the major component elements of a power supply embodying the invention;

Fig. 2 is a detailed schematic diagram of the circuitry depicted by elements of the power supply in Fig. 1; and

Fig. 3 shows the waveform of the current flowing out of the inductor of the series resonant circuit of the oscillator of the power supply of this invention.

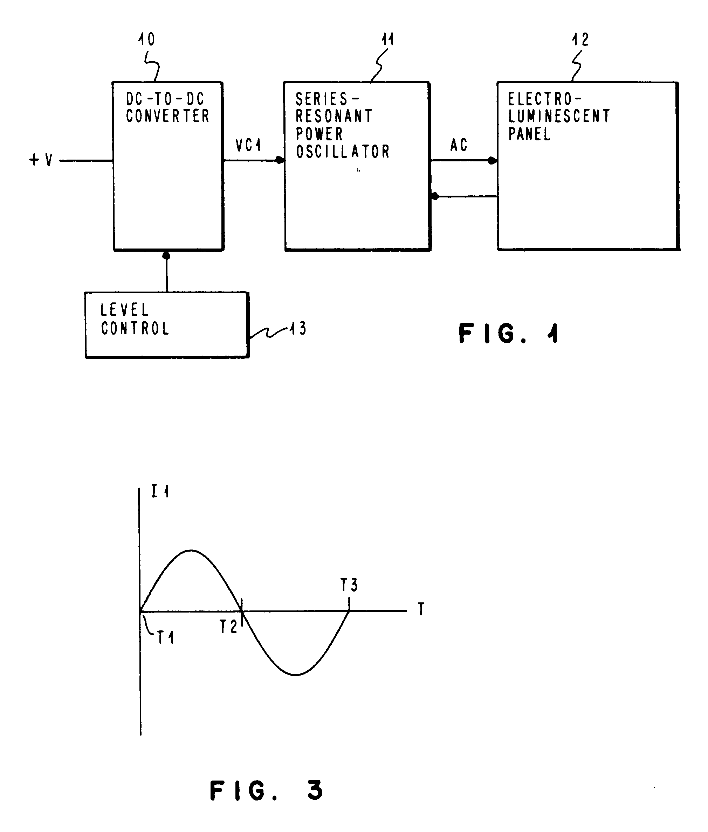

Referring now to Fig. 1, a block diagram of an adjustable level, highly efficient power supply for driving the capacitive load represented by an electroluminescent panel for a battery powered, portable computer product is shown. The power supply comprises the two primary components of an adjustable DC-to-DC converter and a series resonant power oscillator.

In Fig. 1, the DC-to-DC converter 10 receives a relatively low DC voltage from a battery power supply of a portable personal computer. The converter 10 converts this relatively low DC voltage to a substantially higher DC voltage for application to the series resonant power oscillator 11. The power oscillator 11 includes, in its series resonant circuit, the electroluminescent lighting panel 12, itself. Additionally, connected to the DC-to-DC converter 10 is an intensity control 13 which allows the output voltage of the converter 10 to be varied which, in turn, controls the intensity of the lighting panel 12. The relatively low DC voltage applied to the converter 10 may also be derived from a low voltage AC-to-DC converter which is typically used with portable, battery powered products when they are near AC power to avoid unnecessary battery drain.

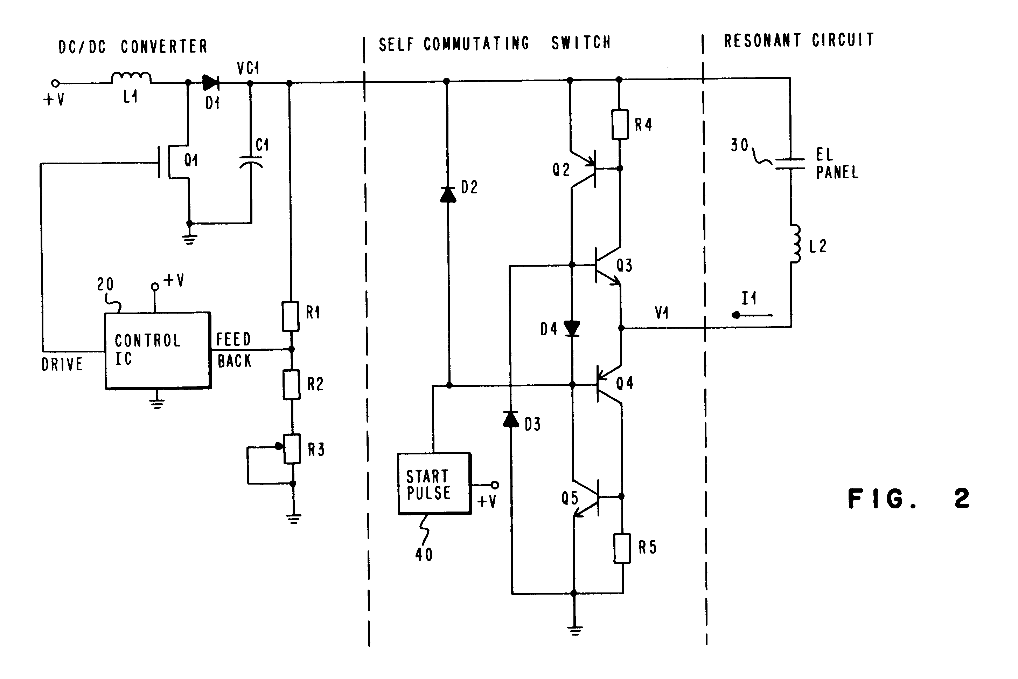

In Fig. 2, a detailed schematic diagram of the circuitry of this invention is shown. A positive voltage +V, which is obtained from batteries or other suitable low voltage DC source is applied to an inductor L1. Initially, the switching device Q1 is in an ON state which causes V to be across the inductor L1. This causes a flow of current through, and energy storage in, the inductor L1. During this time a diode D1 blocks conduction from a capacitor C1 to the inductor L1 while the switching device Q1 is in the ON state.

At a time determined by the control circuit 20, the switching device Q1 is turned off. At this time the energy stored in the inductor L1 causes the voltage at the anode of the diode D1 to rise, which causes conduction of the diode D1 and transfer of energy stored in the inductor L1 to the capacitor C1. Repetition of this cycle maintains voltage across the capacitor C1 at a level higher than V. An adjustable voltage divider consisting of resistors R1, R2, and R3 causes the control circuit 20 to switch the device Q1 with an appropriate duty cycle to cause the voltage at the capacitor C1 to maintain a desired value.

Any of a number of commercially available control circuits may be used for the control circuit 20, including the Unitrode 1843 Off-Line Current Mode Pulse Width Modulation Controller or the Texas Instruments TL494 Switchmode Pulse Width Modulation Control Circuit.

Those skilled in the art will note that a variety of DC-to-DC converter designs may used for the above-described portion of this circuit, it being required only that an efficient means be provided to increase a DC voltage to a level higher than that made available by a typical, low voltage battery supply.

The self commutating switching and resonant circuit comprises an oscillator which operates from the potential across the capacitor C1. The electroluminescent panel is represented in this circuit as a capacitance 30. The capacitance 30 of the electroluminescent panel is in series with an inductor L2. Together, this capacitance 30 and inductor L2 form a series resonant circuit which will ring upon the existence of any current flow in these components.

For an analysis of the self commutating switch and resonant circuit which form the power oscillator circuit, assume that the resonant circuit formed by the inductor L2 and the capacitance 30 of the electroluminescent panel is in a state of oscillation. In addition to Fig. 2, reference is also made to Fig. 3, which shows the sinusoidal wave form of the current I1 which flows through this resonant circuit. At time T1 when I1 becomes a positive value, the voltage V1 at the emitters of transistors Q3 and Q4 rises above the voltage VC1 (across capacitor C1) causing current flow through the base-emitter junction of transistor Q4 and through the diode D2. This current flow causes transistor Q4 to turn on which provides base current to transistor Q5. This causes transistor Q5 to also turn on which provides additional base current to transistor Q4.

The regenerative effect of this connection of transistors Q4 and Q5 causes both devices to saturate, thereby forming a latching circuit. Since both of these transistors are saturated, the voltage V1 decreases to near ground level. This has the effect of putting capacitor C1 in series with the resonant circuit and causes energy transfer from capacitor C1 into the resonant circuit while the current I1 is positive. The energy delivered from capacitor C1 to the circuit is what overcomes losses in the circuit and is used by the circuit in producing light from the electroluminescent panel.

At time T2, when the current I1 becomes negative, the combination of transistors Q4 and Q5 no longer has a source of current to maintain them in a conductive state and, therefore, becomes an open circuit. The current I1 flows in the opposite direction through the base-emitter junction of the transistor Q3 from the diode D3. Current flow through transistor Q3 causes transistor Q2 to turn on and the regenerative action of the combination of transistor Q2 and Q3 form a latching circuit similar to the Q4-Q5 transistor combination. During the time between T2 and T3, the voltage V1 is forced to be near VC1 which causes the capacitor C1 to be out of the series resonant circuit and prevents energy from being returned to the capacitor C1 during the negative half cycle of the current I1. At time T3 the current I1 again becomes positive and the cycle repeats itself, as described above beginning at time T1.

The diode D4 prevents simultaneous conduction of transistors Q3 and Q4 and thus, prevents extraneous noise from causing simultaneous conduction in both latching circuits. The resistors R4 and R5 prevent transistors Q2 and Q5 from being turned on by leakage currents from transistors Q3 and Q4.

To start the oscillation of this circuit, a starting pulse in supplied by the start pulse generator 40 which may, for example, comprise a monostable multivibrator circuit, known in the art as a "one-shot". The starting pulse from circuit 40 is applied to the base of transistor Q4 which causes transistor Q4 to conduct and begin the initial, self-commutating action of the circuit.

Energy is consumed during each cycle of the resonant circuit due to both heat losses and light output from the circuit. The current I1 in the oscillator will seek a level such that the losses in each complete cycle will equal the energy received from the capacitor C1 during the positive half of the cycle. Accordingly, by adjusting the voltage VC1, the energy transfer and current level I1 may be varied to produce the desired light output from the panel.

In summary, a very efficient and compact circuit has been shown to power a load such as the capacitance of an electroluminescent panel which may be used for back lighting liquid crystal displays in portable computers. Fundamental to this efficient power conversion device is the use of the capacitive load in a series resonant, self-commutating power oscillator. The power oscillator inherently provides the desired sinusoidal output waveform.

## Claims

1. A circuit for energising an electroluminescent panel with sinusoidal power comprising a series-resonant power oscillator (11) having said panel (30) and an inductor (L2) connected in series as its resonant components, characterised in that said power oscillator is a self-commutating power oscillator comprising additionally a first latch circuit (Q4,Q5) for completing a series-circuit path from a low DC-to-high DC converter, which supplies said oscillator, through the resonant components to a reference voltage (ground in Fig. 2) during one half (T1-T2) of the period of the resonant frequency of the resonant components, and a second latch circuit (Q2,Q3) for completing a parallel-circuit path across the resonant components during the other half (T2-T3) of the period of the resonant frequency.

2. A circuit according to claim 1 wherein the low DC-to-high DC converter includes means (20,R1,R2,R3) for adjusting the output of the low DC-to-high DC converter to vary the power energising the panel.

3. A circuit according to any one of claims 1 or 2, in which said first latch circuit includes a first transistor (Q4) for completing a circuit path from the low DC-to-high DC converter through the resonant components to the reference voltage, in response to current flow in a first direction from the resonant components, and a second transistor (Q5) coupled to the first transistor to latch the first transistor into conduction during said one half of the period of the resonant frequency.

4. A circuit according to any one of claims 1, 2 or 3, in which said second latch circuit includes a third transistor (Q3) for completing a circuit path across the resonant components, in response to current flow in a direction opposite to said first direction from said resonant components, and a fourth transistor (Q2) coupled to the third transistor to latch the third transistor into conduction during the other half of the period of the resonant frequency.

5. A circuit according to claims 3 and 4 including means (D4) coupled between the first and third transistors to prevent simultaneous conduction of both these transistors.

## Revendications

1. Circuit d'alimentation en énergie sinusoïdale pour un panneau électroluminescent, comprenant un oscillateur de puissance résonnant en série (11) ayant ledit panneau (30) et un inducteur (L2) connectés en série comme étant ses composants résonnants, caractérisé en ce que ledit oscillateur de puissance est un oscillateur de puissance auto-commutateur comprenant en outre une première bascule (Q4, Q5) pour fermer un trajet de circuit en série allant d'un convertisseur de courant continu faible-en courant continu fort qui alimente ledit oscillateur par les composants résonnants jusqu'à une tension de référence (la masse, sur la figure 2) durant une moitié (T1-T2) de la période de la fréquence de résonance des composants résonnants, et une deuxième bascule (Q2, Q3) pour fermer un trajet de circuit parallèle dans les composants résonnants durant l'autre moitié (T2-T3) de la période de la fréquence de résonance.

2. Circuit selon la revendication 1, dans lequel le convertisseur de courant continu faible-en courant continu fort comprend des moyens (20, R1, R2, R3) pour régler la sortie du convertisseur de courant continu faible-en courant continu fort afin de faire varier l'alimentation en énergie du panneau.

3. Circuit selon les revendications 1 ou 2, dans lequel ladite première bascule comprend un premier transistor (Q4) pour fermer le trajet de circuit allant du convertisseur de courant faible-en courant continu fort par les composants résonnants jusqu'à la tension de référence, en réponse à la circulation du courant dans une première direction depuis les composants résonnants, et un deuxième transistor (Q5) couplé au premier transistor pour verrouiller le premier transistor en état de conduction du courant durant ladite une moitié de la période de la fréquence de résonance.

4. Circuit selon l'une quelconque des revendications 1, 2, ou 3, dans lequel ladite deuxième bascule comprend un troisième transistor (Q3) pour fermer un trajet de circuit dans les composants résonnants, en réponse à la circulation du courant dans une direction opposée à ladite première direction depuis les composants résonnants, et un quatrième transistor (Q2) couplé au troisième transistor pour verrouiller le troisième transistor en état de conduction du courant durant l'autre moitié de la période de la fréquence de résonance.

5. Circuit selon les revendications 1 et 4, comprenant des moyens (D4) couplés entre les premier et troisième transistors pour empêcher la conduction simultanée de ces deux transistors.

## Patentansprüche

1. Schaltung zur Energieversorgung einer Elektrolumineszenzplatte mit sinusförmigem Strom, welche einen Serienresonanz-Leistungsoszillator (119 besitzt, wobei die Platte (30) und eine Spule (L2) als seine Resonanzkomponenten in Serie geschaltet sind, dadurch gekennzeichnet, daß der Leistungsoszillator ein selbstgeführter Leistungsoszillator ist, der zusätzlich eine erste Verriegelungsschaltung (Q4, Q5) aufweist, die einen Serienschaltungszweig von einem den Oszillator versorgenden niedrige Gleichspannung/hohe Gleichspannung-Wandler über die Resonanzkomponenten zu einer Referenzspannung (Masse in Fig. 2) während einer Periodenhälfte (T1-T2) der Resonanzfrequenz der Resonanzkomponenten herstellt, sowie eine zweite Verriegelungsschaltung (Q2, Q3), die einen Parallelschaltungszweig über die Resonanzkomponenten während der anderen Periodenhälfte (T2-T3) der Resonanzfrequenz herstellt.

2. Schaltung nach Anspruch 1, bei welcher der niedrige Gleichspannung/hohe Gleichspannung-Wandler Mittel (20, R1, R2, R3) zum Einstellen des Ausgangs des niedrige Gleichspannung/hohe Gleichspannung-Wandlers besitzt, um die die Platte speisende Energie zu ändern.

3. Schaltung nach einem der Ansprüche 1 oder 2, bei welcher die erste Verriegelungsschaltung einen ersten Transistor (Q4) besitzt, um als Antwort auf einen Stromfluß in den Resonanzkomponenten in einer ersten Richtung einen Schaltungszweig von dem niedrige Gleichspannung/hohe Gleichspannung-Wandler über die Resonanzkomponenten zu der Referenzspannung herzustellen, sowie einen an den ersten Transistor gekoppelten zweiten Transistor (Q5), um den ersten Transistor während der genannten ersten Periodenhälfte der Resonanzfrequenz in den leitenden Zustand zu verriegeln.

4. Schaltung nach einem der Ansprüche 1, 2 oder 3, bei welchem die zweite Verriegelungsschaltung einen dritten Transistor (Q3) besitzt, um als Antwort auf einen Stromfluß in den Resonanzkomponenten in einer der ersten Richtung entgegengesetzten Richtung einen Schaltungszweig über die Resonanzkomponenten herzustellen, sowie einen vierten, an den dritten Transistor gekoppelten Transistor (Q2), um den dritten Transistor während der anderen Halbperiode der Resonanzfrequenz in den leitenden Zustand zu verriegeln.

5. Schaltung nach Anspruch 3 oder 4, mit einem zwischen den ersten und den dritten Transistor geschalteten Mittel (D4), um ein gleichzeitiges Leiten beider dieser Transistoren zu verhindern.

10

**DC-TO-DC CONVERTER**

11

**SERIES-RESONANT POWER OSCILLATOR**

12

**ELECTRO-LUMINESCENT PANEL**

+V

VC1

AC

**LEVEL CONTROL**

13

# FIG. 4

I1

T3

T

T1

T2

# FIG. 3

FIG. 2

EP 0 278 253 B1